# EUROPEAN PATENT APPLICATION

(11) **EP 4 723 443 A1**
(43) Date of publication of application: **08.04.2026**
(21) Application number: 23938518.0
(22) Date of filing: 25.05.2023
(51) Int. Cl.: H02K 11/33, H02K 9/02

(54) **ROTATING ELECTRICAL MACHINE**

(71) Applicant: Mitsubishi Electric Mobility Corporation, Tokyo 100-8310 (JP)
(72) Inventor: TAKESHIMA, Kenta, Tokyo 100-8310 (JP); FUNABIKI, Yusuke, Tokyo 100-8310 (JP); SONODA, Isao, Tokyo 100-8310 (JP); FUJISAWA, Kazuya, Tokyo 100-8310 (JP)
(74) Representative: Hoffmann Eitle
(86) International application number: PCT/JP2023/019423
(87) International publication number: WO 2024/241555

(57) **Abstract**

A rotating electrical machine according to the present disclosure includes a motor including a rotation shaft, a rotor fixed to the rotation shaft, a stator disposed outside the rotor, a winding wound around the stator, and a motor case accommodating the rotation shaft, the rotor, and the stator, a control unit configured to control the motor, and a housing that is disposed between the stator and the control unit in an axial direction along the rotation shaft and that has a shaft through-hole into which the rotation shaft is inserted, in which the control unit has a substrate on which a heat generation unit is mounted, the housing has a main body portion and a case attachment portion that protrudes from the main body portion toward a stator and that is attached to the motor case, the housing has a heat transfer surface that faces the substrate and that is disposed at a position of overlapping the heat generation unit in the axial direction, a heat dissipating member thermally connecting the heat transfer surface and the heat generation unit is provided between the heat transfer surface and the heat generation unit, and at least a part of the heat transfer surface is disposed at a position of overlapping the case attachment portion in the axial direction.

## Description

### Technical Field

The present disclosure relates to a rotating electrical machine.

### Background Art

In the related art, a rotating electrical machine having a motor and a control unit that controls the motor is known. The control unit has a heat generation unit, which generates heat through current conduction, such as a switching element of a power circuit. Patent Document 1 discloses a structure in which a heat sink is provided above a substrate on which a power circuit is mounted in order to dissipate heat generated in a heat generation unit to the outside of a rotating electrical machine.

### Citation List

### Patent Documents

Patent Document 1: PCT International Publication No. WO2022/230007

### Summary of Invention

### Problem to be Solved by the Invention

In the structure of Patent Document 1, since an additional heat sink is provided in order to dissipate the heat generated in the heat generation unit to the outside of the rotating electrical machine, the size of the rotating electrical machine is increased, and costs of the rotating electrical machine are also increased due to an increase in the number of components. It is required to effectively dissipate the heat generated in the heat generation unit to the outside of the rotating electrical machine while suppressing an increase in the size of the rotating electrical machine.

In view of the above circumstances, an object of the present disclosure is to provide a rotating electrical machine that can effectively dissipate heat generated in a heat generation unit to the outside of the rotating electrical machine while suppressing an increase in the size of the rotating electrical machine.

### Means to Solve the Problem

According to an aspect of the present disclosure, there is provided a rotating electrical machine including a motor including a rotation shaft, a rotor fixed to the rotation shaft, a stator disposed outside the rotor, a winding wound around the stator, and a motor case accommodating the rotation shaft, the rotor, and the stator, a control unit configured to control the motor, and a housing that is disposed between the stator and the control unit in an axial direction along the rotation shaft and that has a shaft through-hole into which the rotation shaft is inserted, in which the control unit has a substrate on which a heat generation unit is mounted, the housing has a main body portion and a case attachment portion that protrudes from the main body portion toward a stator and that is attached to the motor case, the housing has a heat transfer surface that faces the substrate and that is disposed at a position of overlapping the heat generation unit in the axial direction, a heat dissipating member thermally connecting the heat transfer surface and the heat generation unit is provided between the heat transfer surface and the heat generation unit, and at least a part of the heat transfer surface is disposed at a position of overlapping the case attachment portion in the axial direction.

### Effects of the Invention

According to the present disclosure, it is possible to provide a rotating electrical machine that can effectively dissipate the heat generated in the heat generation unit to the outside of the rotating electrical machine while suppressing an increase in the size of the rotating electrical machine.

### Brief Description of Drawings

[FIG. 1] A cross-sectional view of a rotating electrical machine according to Embodiment 1.
[FIG. 2] A cross-sectional view of a control unit according to Embodiment 1.
[FIG. 3] A plan view of a substrate according to Embodiment 1.
[FIG. 4] A plan view of a housing according to Embodiment 1.
[FIG. 5] A plan view of a substrate according to Embodiment 2.
[FIG. 6] A plan view of a housing according to Embodiment 2.
[FIG. 7] A view showing a connector according to Embodiment 3.
[FIG. 8] A partial cross-sectional view of a control unit according to Embodiment 4.
[FIG. 9] A partial cross-sectional view of a control unit according to Embodiment 5.

### Description of Embodiments

Hereinafter, embodiments of the present disclosure will be described with reference to the drawings. The scope of the present disclosure is not limited to the following embodiments and can be changed in any manner within the scope of technical ideas of the present disclosure.

### Embodiment 1.

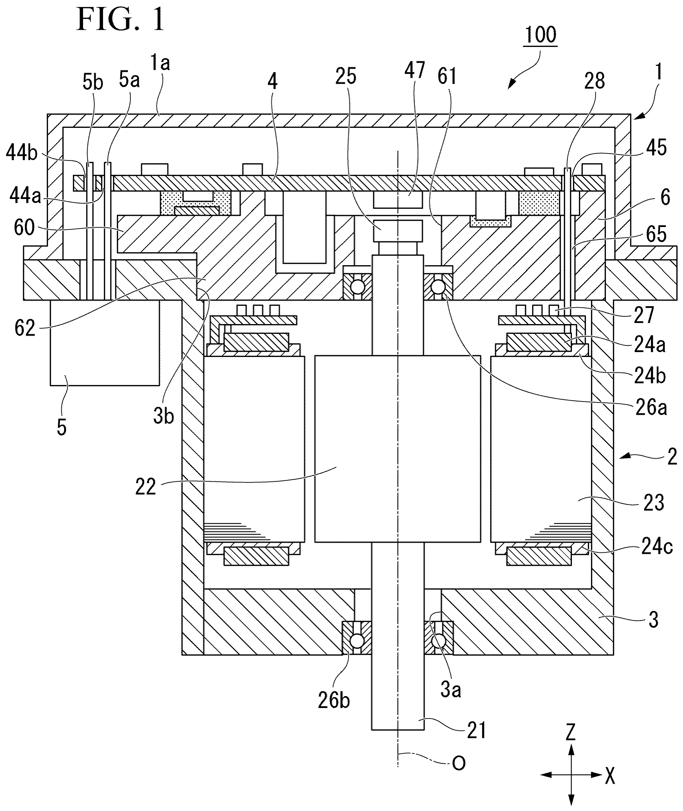

FIG. 1 is a cross-sectional view of a rotating electrical machine 100 in Embodiment 1. Examples of the rotating electrical machine 100 include an inner rotor type power generation electrical machine, an electric motor, or the like, but an electric motor will be described as an example in Embodiment 1, an electric motor.

As shown in FIG. 1, the rotating electrical machine 100 includes a motor 2 and a control unit 1 that controls the motor 2. The control unit 1 includes a substrate 4, a connector 5, a cover 1a, and the like. The motor 2 is a multi-phase winding motor. The motor 2 includes a rotation shaft 21 (output shaft), a rotor 22, a stator 23, a motor case 3, and the like. A housing 6 is provided between the substrate 4 and the stator 23.

In the following description, a direction along a central axis line O of the rotation shaft 21 will be referred to as an axial direction Z. The control unit 1 and the motor 2 are disposed side by side in the axial direction Z. In the axial direction Z, a side on which the control unit 1 is positioned will be referred to as an upper side, and a side on which the motor 2 is positioned will be referred to as a lower side. Viewing from the axial direction Z will be referred to plan view. A view seen from the axial direction Z will be referred to as a plan view. The axial direction Z may not match a vertical direction. One direction orthogonal to the axial direction Z will be referred to as a first orthogonal direction X. A direction orthogonal to both the axial direction Z and the first orthogonal direction X will be referred to as a second orthogonal direction Y.

The rotor 22 is fixed to the rotation shaft 21. A plurality of pairs of permanent magnets (not shown) are disposed on an outer peripheral surface of the rotor 22. The stator 23 is provided to surround an outer periphery of the rotor 22. The stator 23 is disposed radially outward of the rotor 22 with a gap therebetween. A plurality of windings 24a are wound around the stator 23. Specifically, bobbins 24b and 24c are fixed to the stator 23, and the plurality of windings 24a are wound around the bobbins 24b and 24c. The plurality of windings 24a include the windings 24a corresponding to each phase of the motor 2. For example, in a case where the motor 2 is a three-phase motor, the plurality of windings 24a may include the winding 24a corresponding to the U phase, the winding 24a corresponding to the V phase, and the winding 24a corresponding to the W phase. A sensor rotor 25 is attached to an upper end of the rotation shaft 21.

An annular terminal 27 and a plurality of motor terminal portions 28 are provided above the stator 23. The annular terminal 27 is disposed in the vicinity of the windings 24a. The annular terminal 27 is connected to end portions of the windings 24a. The plurality of motor terminal portions 28 extend upward (toward a control unit 1 side) from the annular terminal 27. The plurality of motor terminal portions 28 are each electrically connected to each of the end portions of the plurality of windings 24a via the annular terminal 27.

The motor case 3 has a cylindrical shape having a bottom portion. The motor case 3 accommodates the rotation shaft 21, the rotor 22, and the stator 23. The motor case 3 is made of metal. For example, the motor case 3 consists of an aluminum alloy for die casting. The stator 23 is fixed to an inner surface of the motor case 3. A through-hole 3a that penetrates the bottom portion of the motor case 3 in the axial direction Z is formed in a central portion of the bottom portion of the motor case 3 in plan view. A fitting recess portion 3b to which the housing 6 is fitted is provided at an upper end portion of the motor case 3.

The housing 6 is provided above the stator 23. The housing 6 is fitted to the fitting recess portion 3b of the motor case 3. The housing 6 is a lid that closes an opening on the upper side of the motor case 3. The housing 6 is made of a metal. For example, the housing 6 consists of an aluminum alloy for die casting. The housing 6 forms a boundary between the motor 2 and the control unit 1. A shaft through-hole 61 that penetrates the housing 6 in the axial direction Z is formed in a central portion of the housing 6 in plan view. In plan view, the shaft through-hole 61 has a circular shape with the central axis line O as a center.

An upper end portion of the rotation shaft 21 and the sensor rotor 25 are disposed inside the shaft through-hole 61. In addition, a first bearing 26a is provided in the shaft through-hole 61. A lower end portion of the rotation shaft 21 is inserted into the through-hole 3a. A second bearing 26b is provided in the through-hole 3a. The first bearing 26a and the second bearing 26b rotatably support the rotation shaft 21.

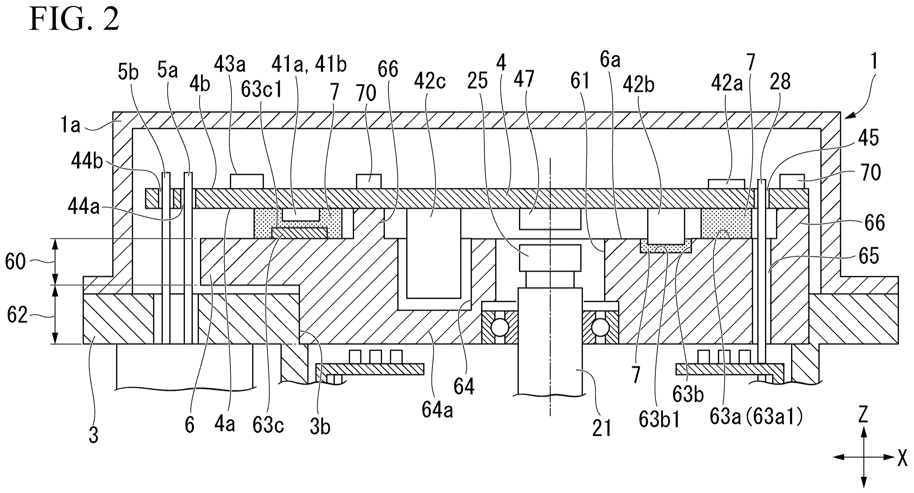

The cover 1a covers the substrate 4 and the housing 6 from above. The cover 1a is attached to the motor case 3. The substrate 4 is disposed inside the cover 1a. The substrate 4 and the cover 1a are disposed to be spaced apart from each other. The substrate 4 is disposed above the housing 6. As shown in FIG. 2, the substrate 4 has a first surface 4a facing the housing 6 and a second surface 4b on an opposite side thereof. The first surface 4a faces downward, and the second surface 4b faces upward. The housing 6 has a facing surface 6a facing the substrate 4. The facing surface 6a faces upward.

Returning to FIG. 1, power from an external power supply and various types of signals from an external control device or the like are supplied to the substrate 4 via the connector 5. The connector 5 has a plurality of power connection terminals 5a for supplying the power from the external power supply provided outside the rotating electrical machine 100 to the substrate 4 and a plurality of signal connection terminals 5b for supplying the various types of signals from the control device or the like provided outside the rotating electrical machine 100 to the substrate 4. The connector 5 is disposed at a position where the connector 5 does not come into contact with the motor 2. In the example shown in the drawing, the connector 5 is disposed below the substrate 4. The plurality of power connection terminals 5a and the plurality of signal connection terminals 5b are connected to the substrate 4 from below.

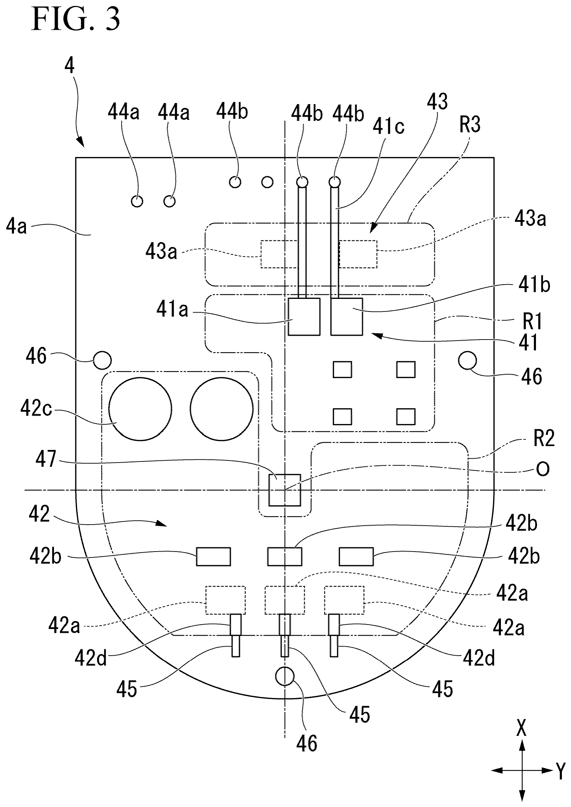

The substrate 4 is disposed to be substantially orthogonal to the axial direction Z. That is, as shown in FIG. 3, the substrate 4 extends in the first orthogonal direction X and the second orthogonal direction Y.

A control circuit 41, a power circuit 42, a filter circuit 43, and the like are mounted on the substrate 4. The substrate 4 has a control circuit mounted region R1 where the control circuit 41 is mounted, a power circuit mounted region R2 where the power circuit 42 is mounted, and a filter circuit region R3 where the filter circuit 43 is mounted.

A plurality of power connection holes 44a connected to the plurality of power connection terminals 5a and a plurality of signal connection holes 44b connected to the plurality of signal connection terminals 5b are formed in the substrate 4. The plurality of power connection holes 44a are disposed at positions of overlapping each of the plurality of power connection terminals 5a in the axial direction Z. The plurality of signal connection holes 44b are disposed at positions of overlapping each of the plurality of signal connection terminals 5b in the axial direction Z. The plurality of power connection holes 44a and the plurality of signal connection holes 44b are disposed in one end portion of the substrate 4 in the first orthogonal direction X. The power connection terminals 5a are inserted into the power connection holes 44a, and the signal connection terminals 5b are inserted into the signal connection holes 44b. The power connection terminals 5a are electrically connected to conductive layers formed on inner surfaces of the power connection hole 44a, for example, by soldering. The signal connection terminals 5b are electrically connected to conductive layers formed on inner surfaces of the signal connection holes 44b, for example, by soldering.

A plurality of motor connection holes 45 connected to the plurality of motor terminal portions 28 are formed in the substrate 4. The plurality of motor connection holes 45 are disposed at positions corresponding to the plurality of motor terminal portions 28. For example, the plurality of motor connection holes 45 are disposed at positions of overlapping each of tip portions of the plurality of motor terminal portions 28 in the axial direction Z. The plurality of motor connection holes 45 are disposed at the other end portion of the substrate 4 in the first orthogonal direction X. The motor terminal portions 28 are inserted into the motor connection holes 45. The motor terminal portions 28 are electrically connected to conductive layers formed on inner surfaces of the motor connection holes 45, for example, by soldering.

The substrate 4 has a plurality of attachment holes 46 into which screws 70 (see FIG. 2) for fixing the substrate 4 to the housing 6 are inserted. The attachment holes 46 are disposed at an outer edge portion of the substrate 4.

Various types of signals from the external control device or the like are input into the control circuit 41 via the signal connection terminals 5b. The control circuit 41 processes these signals. The control circuit 41 controls the power circuit 42 based on the processed signal. In addition, the control circuit 41 processes the information obtained by the substrate 4 and outputs the processed information to the external control device or the like. The control circuit 41 has electronic components, such as a central processing unit (CPU) 41a and an integrated circuit (IC) 41b, and a wiring pattern 41c that connects the electronic components. In addition, the wiring pattern 41c is also connected to the signal connection holes 44b. **In** addition, FIG. 3 shows a part of the wiring pattern 41c. The CPU 41a and the IC 41b are disposed on the first surface 4a of the substrate 4.

The power circuit 42 supplies a current to the plurality of windings 24a to drive the motor 2. The power circuit 42 has electronic components, such as a switching element 42a, a shunt resistor 42b, a capacitor 42c, and a choke coil (not shown), and a wiring pattern 42d that connects the electronic components. In addition, the wiring pattern 42d is also connected to the motor connection holes 45. In addition, FIG. 3 shows a part of the wiring pattern 42d. The switching element 42a is disposed on the second surface 4b of the substrate 4. The shunt resistor 42b and the capacitor 42c are disposed on the first surface 4a of the substrate 4.

The switching element 42a and the shunt resistor 42b of the power circuit 42 are heat generation units that generate heat through current conduction. The heat generation units may include the wiring pattern 42d of the power circuit 42, the CPU 41a, the IC 41b, and the like of the control circuit 41.

The filter circuit 43 performs noise filter processing. The filter circuit 43 has a filter electronic component 43a such as a noise filter capacitor. Specifications of the filter electronic component 43a are determined in accordance with electromagnetic compatibility (EMC) requirements. In the example shown in the drawing, the filter electronic component 43a is disposed on the second surface 4b of the substrate 4. The filter electronic component 43a may be disposed on the first surface 4a of the substrate 4.

In addition, a rotation sensor 47 is mounted on the first surface 4a of the substrate 4. In plan view, the rotation sensor 47 is disposed at a central portion of the substrate 4. The rotation sensor 47 is disposed at a position facing the sensor rotor 25 in the axial direction Z. The rotation sensor 47 detects a signal from the sensor rotor 25 and converts the signal into an electrical signal.

In plan view, the power circuit 42 is disposed around the rotation sensor 47. That is, the power circuit mounted region R2 is disposed around the rotation sensor 47. In plan view, a part of the power circuit 42 (in the example shown in the drawing, the switching element 42a and the shunt resistor 42b) is disposed between the rotation sensor 47 and the motor connection holes 45. The switching element 42a is disposed in the vicinity of the motor connection holes 45. Accordingly, in the wiring pattern 42d, the length of a portion connecting the switching element 42a and the motor connection hole 45 can be minimized.

In plan view, the control circuit 41 is disposed between the power circuit 42 and the signal connection holes 44b. That is, the control circuit mounted region R1 is disposed between the power circuit mounted region R2 (power circuit 42) and the signal connection holes 44b. Accordingly, in the wiring pattern 41c, the length of a portion connecting the control circuit 41 and the signal connection hole 44b can be reduced. The wiring pattern 41c is affected by noise generated in the power circuit 42, but the effect of the noise can be reduced by reducing the length of the wiring pattern 41c. Further, since the effect of the noise received by the wiring pattern 41c can be reduced, the number, size, and the like of the filter electronic component 43a of the filter circuit 43 performing the noise filter processing can be reduced.

Power from the external power supply is supplied to the power circuit 42 via the power connection terminals 5a and the power connection holes 44a. The power circuit 42 outputs an alternating current by switching an ON state and an OFF state of the switching element 42a. The output current is supplied to the windings 24a via the motor connection holes 45 and the plurality of motor terminal portions 28 to rotate the rotation shaft 21.

As shown in FIG. 2, the housing 6 includes a main body portion 60 and a case attachment portion 62 that protrudes downward (toward a stator 23 side) from the main body portion 60. In plan view, the case attachment portion 62 has a circular shape with the central axis line O as a center. The case attachment portion 62 is fitted to the fitting recess portion 3b of the motor case 3 and is mechanically fixed to the fitting recess portion 3b. For example, the case attachment portion 62 is fixed by being press-fitted into the fitting recess portion 3b. The case attachment portion 62 may be fixed to the fitting recess portion 3b using a screw. In order to secure mechanical strength of the case attachment portion 62, the case attachment portion 62 is formed to be thick. The case attachment portion 62 is also thermally connected to the fitting recess portion 3b.

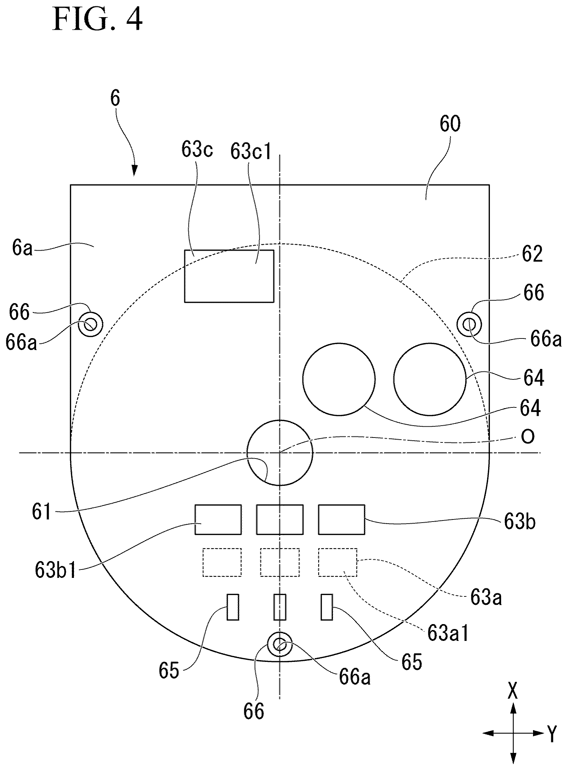

As shown in FIG. 4, the housing 6 has the shaft through-hole 61, a capacitor storage hole 64, a plurality of motor terminal through-holes 65, a substrate attachment portion 66, and the like.

The plurality of motor terminal through-holes 65 are disposed at positions of overlapping each of the plurality of motor connection holes 45 in the axial direction Z. The plurality of motor terminal through-holes 65 penetrate the housing 6 in the axial direction Z. The plurality of motor terminal through-holes 65 are disposed at the other end portion of the housing 6 in the first orthogonal direction X. In plan view, the plurality of motor terminal through-holes 65 are disposed between the shaft through-hole 61 and an outer peripheral surface of the case attachment portion 62. The plurality of motor terminal portions 28 are each inserted into the plurality of motor terminal through-holes 65.

The capacitor storage hole 64 is disposed at a position facing the capacitor 42c in the axial direction Z. In the present embodiment, the capacitor storage hole 64 is a cylindrical recess portion that is recessed downward from the facing surface 6a of the housing 6. The capacitor storage hole 64 has a bottom portion 64a facing the substrate 4. The capacitor storage hole 64 is disposed at a position of overlapping the case attachment portion 62 in the axial direction Z. In plan view, the capacitor storage hole 64 is disposed between the shaft through-hole 61 and the outer peripheral surface of the case attachment portion 62. When the substrate 4 is attached to the housing 6, at least a part of the capacitor 42c is stored in the capacitor storage hole 64. At this time, a gap is formed between the capacitor storage hole 64 and the capacitor 42c.

The substrate attachment portion 66 protrudes from the facing surface 6a toward the substrate 4. An upper surface of the substrate attachment portion 66 abuts against the first surface 4a of the substrate 4. Fastening holes 66a to which the screw 70 are fastened are formed in the substrate attachment portion 66. The fastening holes 66a are disposed at positions of overlapping the attachment holes 46 in the axial direction Z. As the screws 70 are inserted into the attachment holes 46 and are fastened to the fastening holes 66a, the substrate 4 is fixed to the housing 6.

The rotating electrical machine 100 has a heat dissipation structure that dissipates heat generated by the heat generation unit mounted on the substrate 4 to the outside. More specifically, the housing 6 has a heat transfer surface that is disposed at a position of overlapping the heat generation unit in the axial direction Z and that is for transferring the heat generated by the heat generation unit to the housing 6. The heat transfer surface includes a surface 63a1 of a plane portion 63a, a surface 63b1 of a recess portion 63b, a surface 63c1 of a protrusion portion 63c, and the like, which will be described later. A gap is formed between the heat transfer surface and the heat generation unit, and a heat dissipating member 7 is provided in the gap. The heat dissipating member 7 thermally connects the heat generation unit and the housing 6. The heat dissipating member 7 has insulating properties and has high thermal conductivity. The thermal conductivity of the heat dissipating member 7 is sufficiently greater than the thermal conductivity of air. The heat dissipating member 7 is, for example, a silicone-based heat dissipation grease.

Details of the heat dissipation structure will be described. In the housing 6, the plane portion 63a, the recess portion 63b, and the protrusion portion 63c are formed in accordance with the shape and the disposition of the heat generation unit. By forming the plane portion 63a, the recess portion 63b, and the protrusion portion 63c, the size of the gap between the heat transfer surface and the heat generation unit is adjusted.

Specifically, the plane portion 63a that is flush with the facing surface 6a is provided at a portion of overlapping the switching element 42a in the axial direction Z. The plane portion 63a and the switching element 42a are provided with a gap therebetween, and the heat dissipating member 7 is provided in the gap. The surface 63a1 of the plane portion 63a constitutes the heat transfer surface. The surface 63a1 of the plane portion 63a is thermally connected to the switching element 42a via the heat dissipating member 7 and the substrate 4.

The recess portion 63b that is recessed from the facing surface 6a is provided in a portion of overlapping the shunt resistor 42b in the axial direction Z. The recess portion 63b and the shunt resistor 42b are provided with a gap therebetween, and the heat dissipating member 7 is provided in the gap. The surface 63b1 of the recess portion 63b, which faces the substrate 4, constitutes the heat transfer surface. The surface 63b1 of the recess portion 63b is thermally connected to the shunt resistor 42b via the heat dissipating member 7.

In a case where the heat generation unit includes the wiring pattern 42d, the heat transfer surface may include a portion of the facing surface 6a, which overlaps the wiring pattern 42d in the axial direction Z.

The protrusion portion 63c that protrudes from the facing surface 6a is provided at a portion of overlapping the CPU 41a and the IC 41b in the axial direction Z. The protrusion portion 63c, the CPU 41a, and the IC 41b are provided with a gap therebetween, and the heat dissipating member 7 is provided in the gap. The surface 63c1 of the protrusion portion 63c, which faces the substrate 4, is thermally connected to the CPU 41a and the IC 41b via the heat dissipating member 7. In a case where the heat generation unit includes the CPU 41a and the IC 41b, the heat transfer surface may include the surface 63c1 of the protrusion portion 63c.

Heat generated by the heat generation unit disposed on the first surface 4a of the substrate 4, such as the shunt resistor 42b, the CPU 41a, and the IC 41b, is transferred to the heat transfer surface (the surface 63b1 and the surface 63c1) via the heat dissipating member 7. The heat generated by the heat generation unit disposed on the second surface 4b of the substrate 4, such as the switching element 42a, is transferred to the heat transfer surface (surface 63a1) via the substrate 4 and the heat dissipating member 7. In the following description, collectively, this means that the heat generated by the heat generation unit is transferred to the heat transfer surface via the heat dissipating member 7. The heat transferred to the heat transfer surface in this manner is transferred to the motor case 3 via the housing 6 and is dissipated to outside air from the motor case 3. By providing the heat dissipating member 7, the heat generated by the heat generation unit can be efficiently transferred to the heat transfer surface via the heat dissipating member 7.

Herein, in plan view, the heat transfer surface is disposed to overlap the case attachment portion 62 and the vicinity thereof. In plan view, most of the heat transfer surface including a part of the surface 63al, the surface 63b1, and the surface 63c1 is disposed to overlap the case attachment portion 62. That is, in plan view, most of the heat transfer surface is disposed between the shaft through-hole 61 and the outer peripheral surface of the case attachment portion 62. Herein, most of the heat transfer surface is, for example, 70% or more of the entire heat transfer surface. Since a portion of the housing 6 in which the case attachment portion 62 is formed is thick and has a large volume compared to a portion of the housing 6 in which the case attachment portion 62 is not formed, heat generated in the heat generation unit is easily absorbed. By disposing the heat transfer surface as described above, the heat generated in the heat generation unit can be more efficiently transferred to the motor case 3. A part of the heat transfer surface may be disposed in the vicinity of the motor terminal through-holes 65.

An example of an assembly step of the rotating electrical machine 100 will be described.

The rotation shaft 21, the rotor 22, the stator 23, and the like are assembled into the motor case 3. At this time, the sensor rotor 25 attached to the upper end portion of the rotation shaft 21 and the plurality of motor terminal portions 28 extending from the annular terminal 27 can be visually recognized from an opening of the motor case 3 on the upper side. In this state, the case attachment portion 62 of the housing 6 is attached to the fitting recess portion 3b of the motor case 3. At this time, the upper end portion of the rotation shaft 21 to which the sensor rotor 25 is attached is inserted into the shaft through-hole 61 of the housing 6. The plurality of motor terminal portions 28 are inserted into the plurality of motor terminal through-holes 65 of the housing 6.

Next, the heat dissipating member 7 is applied to the heat transfer surface of the housing 6. After then, the substrate 4 is attached to the housing 6. Specifically, the first surface 4a of the substrate 4 is abutted against the upper surface of the substrate attachment portion 66, and the screws 70 are inserted into the attachment holes 46 and are fastened to the fastening holes 66a, thereby the substrate 4 is fixed to the housing 6. At this time, the rotation sensor 47 and the sensor rotor 25 face each other in the axial direction Z with a gap therebetween. In addition, the plurality of motor terminal portions 28 are inserted into the plurality of motor connection holes 45 of the substrate 4. The heat dissipating member 7 is spread between the heat generation unit and the heat transfer surface, and the heat generation unit and the heat transfer surface are thermally connected to each other via the heat dissipating member 7.

As described above, the rotating electrical machine 100 according to the present embodiment includes the motor 2, the control unit 1 that controls the motor 2, and the housing 6 that is disposed between the stator 23 and the control unit 1 in the axial direction Z and that has the shaft through-hole 61 into which the rotation shaft 21 is inserted. The control unit 1 has the substrate 4 on which the heat generation unit is mounted. The housing 6 includes the main body portion 60 and the case attachment portion 62 that protrudes from the main body portion 60 toward the stator 23 and that is attached to the motor case 3. The housing 6 has the heat transfer surface that faces the substrate 4 and that is disposed at a position of overlapping the heat generation unit in the axial direction Z. The heat dissipating member 7 that thermally connects the heat transfer surface and the heat generation unit is provided between the heat transfer surface and the heat generation unit. At least a part of the heat transfer surface is disposed at a position of overlapping the case attachment portion 62 in the axial direction Z.

Heat generated by the heat generation unit can be transferred to the heat transfer surface via the heat dissipating member 7. The heat transferred to the heat transfer surface is transferred to the motor case 3 via the housing 6 and is dissipated from the motor case 3 to the outside of the rotating electrical machine 100. Therefore, the heat generated in the heat generation unit can be dissipated to the outside of the rotating electrical machine 100. In addition, at least a part of the heat transfer surface is disposed at a position of overlapping the case attachment portion 62 in the axial direction Z. Compared to the portion of the housing 6 in which the case attachment portion 62 is not formed, the portion of the housing 6 in which the case attachment portion 62 is formed is thick, and heat generated in the heat generation unit is easily absorbed. By disposing the heat transfer surface as described above, a heat transfer path from the heat generation unit to the case attachment portion 62 can be shortened, and the heat generated in the heat generation unit can be effectively transferred to the motor case 3 via the housing 6 without providing an additional heat sink or the like and can be efficiently dissipated to the outside of the rotating electrical machine 100. Therefore, the size of the rotating electrical machine 100 can be reduced compared to a case where, for example, the heat sink or the like is provided. That is, with the rotating electrical machine 100 according to the present embodiment, the heat generated in the heat generation unit can be effectively dissipated to the outside of the rotating electrical machine 100 while suppressing an increase in the size of the rotating electrical machine 100. In particular, by disposing most of the heat transfer surface at the position of overlapping the case attachment portion 62 in the axial direction Z, the heat generated in the heat generation unit can be more efficiently transferred to the motor case 3.

In addition, the sensor rotor 25 is attached to the rotation shaft 21, and the rotation sensor 47 is mounted on the substrate 4 to face the sensor rotor 25 in the axial direction Z. The motor connection holes 45 connected to the motor terminal portions 28 extending from the windings 24a are formed in the substrate 4. The power circuit 42 including the capacitor 42c and the shunt resistor 42b and the switching element 42a, which are the heat generation units, is mounted on the substrate 4. At least a part of the power circuit 42 is disposed between the motor connection holes 45 and the rotation sensor 47 when viewed from the axial direction Z.

By disposing the power circuit 42 as described above, the length of the wiring pattern 42d, which is a path from the power circuit 42 to the motor connection holes 45, can be shortened. Since the wiring pattern 42d generates heat by driving the motor 2, the length of the wiring pattern 42d can be shortened, and thus the amount of heat generation of the entire substrate 4 can be reduced. In particular, for example, in a case where the switching element 42a is disposed in the vicinity of the motor connection holes 45, the length of a portion connecting the switching element 42a and the motor connection hole 45 in the wiring pattern 42d can be minimized. Therefore, the heat generation of the wiring pattern 42d can be more effectively suppressed, and the amount of heat generation of the entire substrate 4 can be more effectively reduced.

In addition, the capacitor 42c and the shunt resistor 42b are disposed on the first surface 4a of the substrate 4, and the switching element 42a is disposed on the second surface 4b of the substrate 4. The capacitor storage hole 64 that is disposed at a position of overlapping the case attachment portion 62 in the axial direction Z and that stores at least a part of the capacitor 42c is provided in the housing 6.

For example, in a case where the capacitor 42c is disposed on the second surface 4b of the substrate 4, a case where the capacitor storage hole 64 is not provided in the housing 6, or the like, the capacitor 42c protrudes from the substrate 4, and thus the size of the rotating electrical machine 100 increases by the height of the capacitor 42c. By disposing the capacitor 42c on the first surface 4a of the substrate 4 and storing the capacitor 42c in the capacitor storage hole 64, an increase in the size of the rotating electrical machine 100 caused by protrusion of the capacitor 42c from the substrate 4 can be suppressed. **In** addition, the capacitor storage hole 64 is disposed at a position of overlapping the case attachment portion 62 in the axial direction Z. Since the portion of the housing 6 in which the case attachment portion 62 is formed is thick compared to the portion of the housing 6 in which the case attachment portion 62 is not formed, the height (depth) of the capacitor storage hole 64 can be secured, and the capacitor 42c can be reliably accommodated in the capacitor storage hole 64. In addition, a capacitor having a greater height can be used as the capacitor 42c, and the capacity per capacitor can be increased. Therefore, a mounting area of the capacitor 42c on the substrate 4 can be reduced.

In addition, the recess portion 63b that is provided at a position of overlapping the shunt resistor 42b in the axial direction Z and that is recessed from the facing surface 6a of the housing 6 is provided in the housing 6. The surface 63b1 of the recess portion 63b, which faces the substrate 4, is included in the heat transfer surface.

By forming the recess portion 63b in the housing 6, a distance between the heat transfer surface and the heat generation unit can be adjusted. Therefore, heat generated by the heat generation unit can be efficiently transferred to the heat transfer surface via the heat dissipating member 7.

In addition, the control unit 1 has the connector 5 that has the power connection terminals 5a to which power is input from the outside and the signal connection terminals 5b to which a signal is input from the outside. The power connection holes 44a connected to the power connection terminals 5a and the signal connection holes 44b connected to the signal connection terminals 5b are formed in the substrate 4, and the control circuit 41 that controls the power circuit 42 is mounted on the substrate 4. When viewed from the axial direction Z, the control circuit 41 is disposed between the signal connection holes 44b and the power circuit 42.

By disposing the control circuit 41 as described above, the length of the wiring pattern 41c, which is a path from the control circuit 41 to the signal connection holes 44b, can be minimized. The wiring pattern 41c is affected by noise generated in the power circuit 42, but the effect of the noise can be reduced by reducing the length of the wiring pattern 41c. Further, since an effect of noise received by the wiring pattern 41c is reduced, for example, even in a case where the filter circuit 43 that performs noise filter processing on the substrate 4 is mounted, the number, the size, and the like of the filter electronic component 43a of the filter circuit 43 can be reduced. Therefore, the mounting area of the control circuit 41 and the filter circuit 43 on the substrate 4 can be reduced. As a result, the size of the substrate 4 can be reduced, and the size of the rotating electrical machine 100 can be reduced. In addition, for example, in a case where the power circuit is disposed between the signal connection hole and the control circuit, it is necessary for the wiring pattern, which is the path from the control circuit to the signal connection holes, to pass through a periphery of the power circuit, and the length of the wiring pattern is also long. Therefore, the wiring pattern is easily affected by noise generated in the power circuit. As a result, it is also necessary to increase the number, the size, and the like of the mounted components of the filter circuit, the size of the substrate is increased, and the size of the rotating electrical machine is also increased.

In addition, the capacitor storage hole 64 has the bottom portion 64a facing the substrate 4.

The bottom portion 64a divides an internal space of the capacitor storage hole 64 and an internal space of the motor 2. Therefore, even in a case where foreign matters such as dust are generated on a capacitor 42c side, the foreign matters can be prevented from entering a motor 2 side. Since the portion of the housing 6 in which the case attachment portion 62 is formed is thick compared to the portion of the housing 6 in which the case attachment portion 62 is not formed, the capacitor storage hole 64 having the bottom portion 64a can be easily formed.

### Embodiment 2.

Next, a rotating electrical machine according to Embodiment 2 will be described. Since the basic configuration of the rotating electrical machine according to the present embodiment is the same as that of the rotating electrical machine according to Embodiment 1, description will be made focusing on different points.

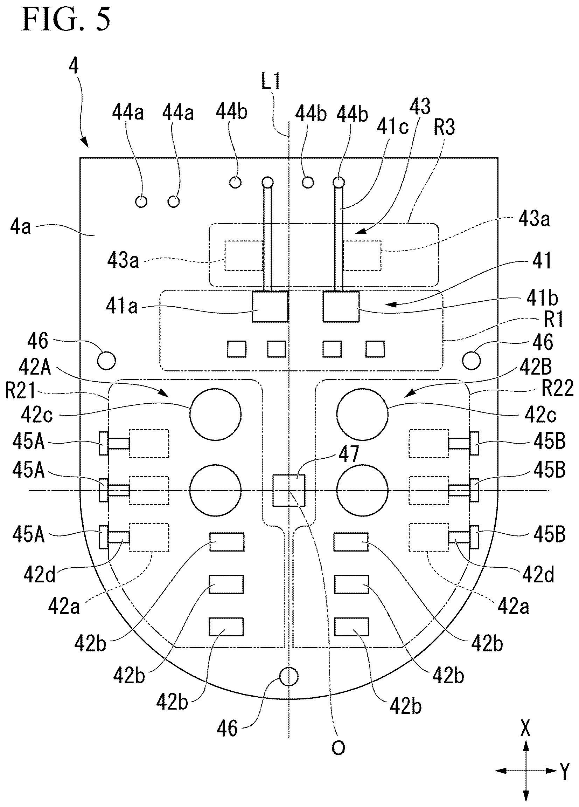

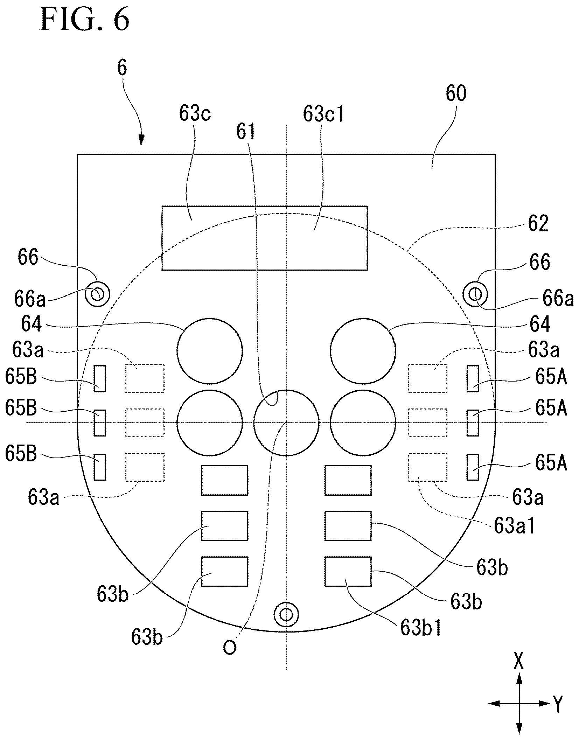

FIG. 5 is a plan view of the substrate 4 according to Embodiment 2. FIG. 6 is a plan view of the housing 6 according to Embodiment 2.

As shown in FIGS. 5 and 6, in the present embodiment, the control unit 1 has two systems of power circuits 42A and 42B (hereinafter, also referred to as a first power circuit 42A and a second power circuit 42B). In addition, although not shown, the plurality of windings 24a have two systems of windings (hereinafter, also referred to as a plurality of first windings and a plurality of second windings). The first power circuit 42A supplies a current to the plurality of first windings to drive the motor 2. The second power circuit 42B supplies a current to the plurality of second windings to drive the motor 2. As described above, redundancy of the system is ensured by configuring the two systems of the power circuits 42A and 42B to be capable of driving the motor 2 independently of each other.

A plurality of first motor connection holes 45A connected to the plurality of motor terminal portions 28 extending from the plurality of first windings and a plurality of second motor connection holes 45B connected to the plurality of motor terminal portions 28 extending from the plurality of second windings are formed in the substrate 4. The plurality of first motor connection holes 45A are disposed at positions corresponding to the plurality of motor terminal portions 28 extending from the plurality of first windings. The plurality of second motor connection holes 45B are disposed at positions corresponding to the plurality of motor terminal portions 28 extending from the plurality of second windings. For example, the plurality of first motor connection holes 45A are disposed in one end portion of the substrate 4 in the second orthogonal direction Y. The plurality of second motor connection holes 45B are disposed at the other end portion of the substrate 4 in the second orthogonal direction Y.

The substrate 4 has the control circuit mounted region R1 where the control circuit 41 is mounted, a first power circuit mounted region R21 where the first power circuit 42A is mounted, a second power circuit mounted region R22 where the second power circuit 42B is mounted, and the filter circuit region R3 where the filter circuit 43 is mounted.

The power circuits 42A and 42B each have the same configuration as that of the power circuit 42 described in Embodiment 1. Specifically, the power circuits 42A and 42B each have electronic components, such as the switching element 42a, the shunt resistor 42b, the capacitor 42c, and the choke coil (not shown), and the wiring pattern 42d that connects these electronic components. **In** addition, the wiring pattern 42d of the first power circuit 42A is also connected to the first motor connection hole 45A, and the wiring pattern 42d of the second power circuit 42B is also connected to the second motor connection hole 45B. The switching elements 42a of the power circuits 42A and 42B are disposed on the second surface 4b of the substrate 4. The shunt resistors 42b and the capacitors 42c of the power circuits 42A and 42B are disposed on the first surface 4a of the substrate 4.

In plan view, the first power circuit 42A is disposed around the rotation sensor 47. That is, the first power circuit mounted region R21 is disposed around the rotation sensor 47. A part of the first power circuit 42A is disposed between the rotation sensor 47 and the first motor connection holes 45A. The switching element 42a of the first power circuit 42A is disposed in the vicinity of the first motor connection holes 45A.

In plan view, the second power circuit 42B is disposed around the rotation sensor 47. That is, the second power circuit mounted region R22 is disposed around the rotation sensor 47. A part of the second power circuit 42B is disposed between the rotation sensor 47 and the second motor connection holes 45B. The switching element 42a of the second power circuit 42B is disposed in the vicinity of the second motor connection holes 45B.

The first power circuit 42A and the first motor connection holes 45A are disposed on a first side of the rotation sensor 47 in the second orthogonal direction Y, and the second power circuit 42B and the second motor connection holes 45B are disposed on a second side of the rotation sensor 47 in the second orthogonal direction Y. The first power circuit 42A and the second power circuit 42B are disposed symmetrically with respect to a reference straight line L1 that passes through the central axis line O and that extends in the first orthogonal direction X in plan view. Accordingly, occurrence of a difference in electrical characteristics between the first power circuit 42A and the second power circuit 42B can be suppressed, and it is not necessary to provide additional components or the like for compensating for the difference in the electrical characteristics, so that mounting efficiency of the substrate 4 is improved. The disposition of the first power circuit 42A, the first motor connection holes 45A, the second power circuit 42B, and the second motor connection holes 45B is not limited thereto.

A plurality of first motor terminal through-holes 65A into which the plurality of motor terminal portions 28 extending from the plurality of first windings are inserted and a plurality of second motor terminal through-holes 65B into which the plurality of motor terminal portions 28 extending from the plurality of second windings are inserted are formed in the housing 6. The plurality of first motor terminal through-holes 65A are disposed in one end portion of the housing 6 in the second orthogonal direction Y. The plurality of second motor terminal through-holes 65B are disposed in the other end portion of the housing 6 in the second orthogonal direction Y. The plurality of first motor terminal through-holes 65A and the plurality of second motor terminal through-holes 65B are disposed with the shaft through-hole 61 interposed therebetween.

In the present embodiment, the switching element 42a and the shunt resistor 42b of the first power circuit 42A and the switching element 42a and the shunt resistor 42b of the second power circuit 42B are heat generation units that generate heat through current conduction. The heat generation units may include the wiring patterns 42d of the power circuits 42A and 42B, the CPU 41a, the IC 41b, and the like of the control circuit 41.

The housing 6 has the heat transfer surface that is disposed at a position of overlapping the heat generation unit in the axial direction Z and that is for transferring the heat generated by the heat generation unit to the housing 6. In the present embodiment, the heat transfer surface includes the surface 63a1 of the plane portion 63a provided at a portion of overlapping the switching elements 42a of the power circuits 42A and 42B in the axial direction Z and the surface 63b1 of the recess portion 63b provided at a portion of overlapping the shunt resistors 42b of the power circuits 42A and 42B in the axial direction Z. In a case where the heat generation unit includes the wiring patterns 42d of the power circuits 42A and 42B, the heat transfer surface may include the portion of the facing surface 6a, which overlaps the wiring pattern 42d of the power circuits 42A and 42B in the axial direction Z. In a case where the heat generation unit includes the CPU 41a and the IC 41b, the heat transfer surface may include the surface 63c1 of the protrusion portion 63c.

Even in the present embodiment, the heat transfer surface is disposed at a position of overlapping the case attachment portion 62 and the vicinity thereof in the axial direction Z. Most of the heat transfer surface is disposed at the position of overlapping the case attachment portion 62 in the axial direction Z. That is, in plan view, most of the heat transfer surface is disposed between the shaft through-hole 61 and the outer peripheral surface of the case attachment portion 62. Herein, most of the heat transfer surface is, for example, 70% or more of the entire heat transfer surface. By disposing the heat transfer surface as described above, heat generated in the heat generation unit can be more efficiently transferred to the motor case 3. A part of the heat transfer surface may be disposed in the vicinity of the motor terminal through-holes 65A and 65B.

As described above, in the rotating electrical machine 100 according to the present embodiment, the windings 24a have the first windings and the second windings. The sensor rotor 25 is attached to the rotation shaft 21, and the rotation sensor 47 is mounted on the substrate 4 to face the sensor rotor 25 in the axial direction Z. The first motor connection holes 45A connected to the motor terminal portions 28 extending from the first windings and the second motor connection holes 45B connected to the motor terminal portions 28 extending from the second windings are formed in the substrate 4. The first power circuit 42A that includes the shunt resistor 42b and the switching element 42a, which are the heat generation units, and that supplies a current to the first windings and the second power circuit 42B that includes the shunt resistor 42b and the switching element 42a, which are the heat generation units, and that supplies a current to the second windings are mounted on the substrate 4. When viewed from the axial direction Z, the first power circuit 42A and the first motor connection holes 45A are disposed on a first side with respect to the reference straight line L1, and the second power circuit 42B and the second motor connection holes 45B are disposed on a second side with respect to the reference straight line L1. When viewed from the axial direction Z, at least a part of the first power circuit 42A is disposed between the first motor connection holes 45A and the rotation sensor 47, and at least a part of the second power circuit 42B is disposed between the second motor connection holes 45B and the rotation sensor 47.

By providing the two power circuits 42A and 42B, the redundancy of the system is ensured. **In** addition, since a current is supplied to the windings 24a using the two power circuits 42A and 42B, the current supplied per one power circuit can be reduced, and the amount of heat generation per one power circuit can be reduced. In addition, when viewed from the axial direction Z, the first power circuit 42A and the first motor connection holes 45A are disposed on a first side with respect to the reference straight line L1, and the second power circuit 42B and the second motor connection holes 45B are disposed on a second side with respect to the reference straight line L1, the heat generation unit is disposed to be dispersed, and the heat transfer surface is also disposed to be dispersed. Therefore, local heat generation caused by concentration of the heat generation units can be suppressed, and heat generated by the heat generation units can be efficiently transferred to the housing 6.

### Embodiment 3.

Next, a rotating electrical machine according to Embodiment 3 will be described. Since the basic configuration of the rotating electrical machine according to the present embodiment is the same as that of the rotating electrical machine according to Embodiment 1, a description will be made focusing on different points.

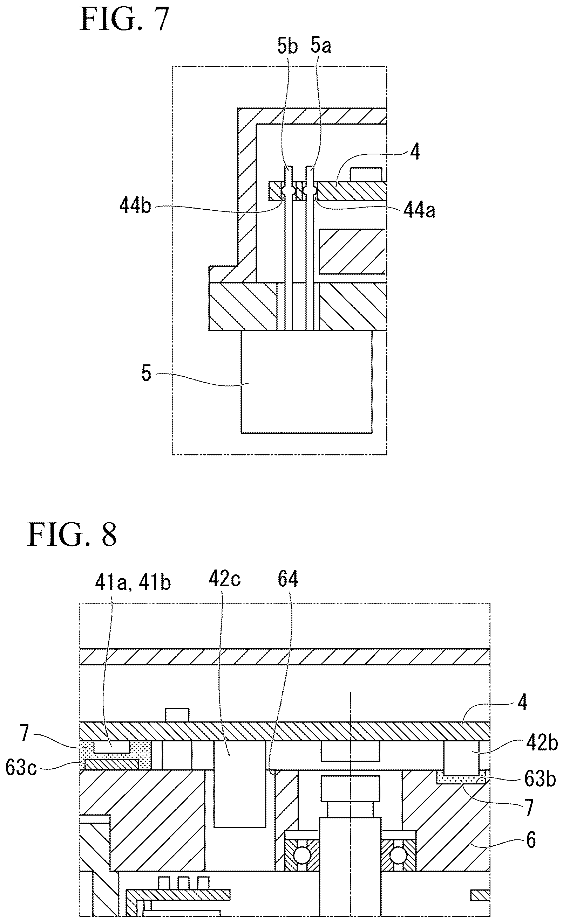

As shown in FIG. 7, in the present embodiment, the power connection terminals 5a and the signal connection terminals 5b are press-fit terminals. By being press-fitted into the power connection holes 44a and the signal connection holes 44b, the power connection terminals 5a and the signal connection terminals 5b are electrically connected to the conductive layers formed on the inner surfaces of the power connection holes 44a and the signal connection holes 44b by coming into contact with the conductive layers.

As described above, in the rotating electrical machine 100 according to the present embodiment, the power connection terminals 5a and the signal connection terminals 5b are press-fit terminals.

Accordingly, since the substrate 4 and the connector 5 can be easily electrically connected without performing soldering or the like, it is easy to assemble the rotating electrical machine 100. In addition, for example, in a case where both the power connection terminals 5a and the signal connection terminals 5b and the motor terminal portions 28 are attached to the substrate 4 by soldering, when a direction in which the power connection terminals 5a and the signal connection terminals 5b extend is different from a direction in which the motor terminal portions 28 extend, it is necessary to perform the soldering of the power connection terminals 5a and the signal connection terminals 5b and the soldering of the motor terminal portions 28 in different directions, and the assembly work is complicated. Therefore, in a case where both the power connection terminals 5a and the signal connection terminals 5b and the motor terminal portions 28 are attached to the substrate 4 by soldering, it is preferable to dispose the connector 5 such that the power connection terminals 5a and the signal connection terminals 5b and the motor terminal portions 28 extend in the same direction. However, in the present embodiment, since the power connection terminals 5a and the signal connection terminals 5b are attached to the substrate 4 by press-fitting, even when the direction in which the power connection terminals 5a and the signal connection terminals 5b extend is different from the direction in which the motor terminal portions 28 extend, the power connection terminals 5a and the signal connection terminals 5b can be easily attached to the substrate 4.

### Embodiment 4.

Next, a rotating electrical machine according to Embodiment 4 will be described. Since the basic configuration of the rotating electrical machine according to the present embodiment is the same as that of the rotating electrical machine according to Embodiment 1, a description will be made focusing on different points.

As shown in FIG. 8, in the present embodiment, the capacitor storage hole 64 penetrates the housing 6 in the axial direction Z. Even in this case, at least a part of the capacitor 42c is stored in the capacitor storage hole 64. Therefore, an increase in the size of the rotating electrical machine 100 caused by protrusion of the capacitor 42c from the substrate 4 can be suppressed. In addition, since a through-hole is formed as the capacitor storage hole 64, the capacitor storage hole 64 is easily formed.

### Embodiment 5.

Next, a rotating electrical machine according to Embodiment 5 will be described. Since the basic configuration of the rotating electrical machine according to the present embodiment is the same as that of the rotating electrical machine according to Embodiment 4, a description will be made focusing on different points.

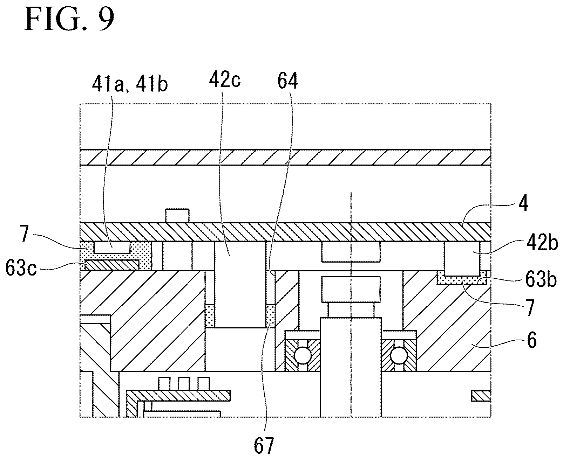

As shown in FIG. 9, in the present embodiment, a second heat dissipating member 67 is provided between the capacitor storage hole 64 and the capacitor 42c. The capacitor 42c is thermally connected to the capacitor storage hole 64 via the second heat dissipating member 67. The second heat dissipating member 67 may be the same as or different from the heat dissipating member 7 provided between the heat transfer surface and the heat generation unit.

As described above, in the present embodiment, the second heat dissipating member 67 that thermally connects the capacitor storage hole 64 and the capacitor 42c is provided between the capacitor storage hole 64 and the capacitor 42c. Accordingly, since the heat generated in the capacitor 42c can be transferred to the capacitor storage hole 64 via the second heat dissipating member 67, a temperature rise of the capacitor 42c can be suppressed, and deterioration caused by the heat generation of the capacitor 42c can be suppressed. Herein, in general, the type, the number, and the like of the capacitor used in the control unit are determined in consideration of deterioration caused by the heat generation. For example, in a case where it is assumed that a degree of deterioration caused by the heat generation of the capacitor is large, a capacitor having a larger capacity (that is, a larger size) is selected, or the number of capacitors is increased. In the present embodiment, since the deterioration caused by the heat generation of the capacitor 42c can be suppressed, an increase in the size and the number of the capacitors 42c can be prevented, and an increase in the size of the rotating electrical machine 100 can be suppressed.

The technical scope of the present disclosure is not limited to the embodiments described above, and various modifications can be made without departing from the gist of the present disclosure.

For example, a configuration where the plane portion 63a, the protrusion portion 63c, and the recess portion 63b are formed in the housing 6 has been described, but the present invention is not limited thereto. For example, the plane portion 63a may not be formed in the housing 6, and a protrusion portion that protrudes from the facing surface 6a may be provided at a portion of the housing 6, which overlaps the switching element 42a in the axial direction Z. The recess portion 63b may not be formed in the housing 6, and the portion of the housing 6, which overlaps the shunt resistor 42b in the axial direction Z may be flush with the facing surface 6a. That is, all the heat transfer surfaces may be flush with the facing surface 6a of the housing 6, all the heat transfer surfaces may be formed on a surface of the protrusion portion that protrudes from the facing surface 6a, which faces the substrate 4, all the heat transfer surfaces may be formed on a surface of the recess portion that is recessed from the facing surface 6a, which faces the substrate 4, or the heat transfer surfaces may be a combination thereof. **In** addition, the heat dissipating member 7 may be disposed at a portion other than a portion between the heat generation unit and the heat transfer surface. In addition, the heat transfer surface may not be provided for a portion of the heat generation unit which does not need to transfer heat to the housing 6 (an electronic component, a wiring pattern, or the like).

In addition, the shunt resistor 42b, the CPU 41a, the IC 41b, or the like may be disposed on the second surface 4b of the substrate 4. In this case, heat generated by the shunt resistor 42b, the CPU 41a, or the IC 41b is transferred to the heat transfer surface via the substrate 4 and the heat dissipating member 7 In addition, in this case, a protrusion portion that is provided at a position of overlapping the shunt resistor 42b, the CPU 41a, or the IC 41b in the axial direction Z and that protrudes from the facing surface 6a of the housing 6 may be formed at the housing 6.

In addition, in a case where the control circuit 41 includes the capacitor, the capacitor storage hole for storing the capacitor of the control circuit 41 may be provided in the housing 6.

In addition, the second heat dissipating member 67 may be provided between the capacitor storage hole 64 having the bottom portion 64a in Embodiment 1 and the capacitor 42c.

Although the switching element 42a and the shunt resistor 42b of the power circuit 42 and the CPU 41a, the IC 41b, and the like of the control circuit 41 are given as examples of the heat generation unit, the heat generation unit is not limited thereto. For example, in a case where a motor relay element, a power supply relay element, and the like are mounted on the power circuit 42, these electronic components may be included in the heat generation unit. The motor relay element may be disposed on the substrate 4 between the switching element 42a and the motor connection holes 45 (in Embodiment 2, between the switching element 42a and the first motor connection holes 45A or the second motor connection holes 45B), and the power supply relay element may be disposed between the plurality of power connection holes 44a and the capacitor 42c. In addition, in a case where the filter electronic component 43a of the filter circuit 43 includes a filter coil, the filter coil may be included in the heat generation unit.

In addition, the embodiments or modification examples described above may be combined as appropriate. Reference Signs List

1 Control unit
2 Motor
3 Motor case
4 Substrate
4a First surface
4b Second surface
5 Connector
5a Power connection terminal
5b Signal connection terminal
6 Housing
6a Facing surface
7 Heat dissipating member
21 Rotation shaft
22 Rotor
23 Stator
24a Winding
25 Sensor rotor
28 Motor terminal portion
41 Control circuit
41a CPU
41b IC
42, 42A, 42B Power circuit
42a Switching element
42b Shunt resistor
42c Capacitor
44a Power connection hole
44b Signal connection hole
45, 45A, 45B Motor connection hole
47 Rotation sensor
60 Main body portion
61 Shaft through-hole
62 Case attachment portion
63a Plane portion
63a1 Surface (heat transfer surface)
63b Recess portion
63b1 Surface (heat transfer surface)
64 Capacitor storage hole
64a Bottom portion
67 Second heat dissipating member
100 Rotating electrical machine
L1 Reference straight line
O Central axis line
X First orthogonal direction (orthogonal direction)
Y Second orthogonal direction
Z Axial direction

## Claims

1. A rotating electrical machine comprising:
a motor including a rotation shaft, a rotor fixed to the rotation shaft, a stator disposed outside the rotor, a winding wound around the stator, and a motor case accommodating the rotation shaft, the rotor, and the stator;
a control unit configured to control the motor; and
a housing that is disposed between the stator and the control unit in an axial direction along the rotation shaft and that has a shaft through-hole into which the rotation shaft is inserted,
wherein the control unit has a substrate on which a heat generation unit is mounted,
the housing has a main body portion and a case attachment portion that protrudes from the main body portion toward a stator and that is attached to the motor case,
the housing has a heat transfer surface that faces the substrate and that is disposed at a position of overlapping the heat generation unit in the axial direction,
a heat dissipating member thermally connecting the heat transfer surface and the heat generation unit is provided between the heat transfer surface and the heat generation unit, and
at least a part of the heat transfer surface is disposed at a position of overlapping the case attachment portion in the axial direction.

2. The rotating electrical machine according to Claim 1,
wherein a sensor rotor is attached to the rotation shaft, and a rotation sensor is mounted on the substrate to face the sensor rotor in the axial direction,
a motor connection hole connected to a motor terminal portion extending from the winding is formed in the substrate,
a power circuit including a capacitor, a shunt resistor, and a switching element is mounted on the substrate, the shunt resistor and the switching element being the heat generation units and
when viewed from the axial direction, at least a part of the power circuit is disposed between the motor connection hole and the rotation sensor.

3. The rotating electrical machine according to Claim 2,
wherein the control unit has a connector having a power connection terminal to which power is input from an outside and a signal connection terminal to which a signal is input from the outside,
a power connection hole connected to the power connection terminal and a signal connection hole connected to the signal connection terminal are formed in the substrate, and a control circuit that controls the power circuit is mounted on the substrate, and
when viewed from the axial direction, the control circuit is disposed between the signal connection hole and the power circuit.

4. The rotating electrical machine according to Claim 1,
wherein the winding has a first winding and a second winding,
a sensor rotor is attached to the rotation shaft, and a rotation sensor is mounted on the substrate to face the sensor rotor in the axial direction,
a first motor connection hole connected to a motor terminal portion extending from the first winding and a second motor connection hole connected to a motor terminal portion extending from the second winding are formed in the substrate,
a first power circuit that supplies a current to the first winding and a second power circuit that supplies a current to the second winding are mounted on the substrate,
each of the first power circuit and the second power circuit includes a capacitor, a shunt resistor, and a switching element, the shunt resistor and the switching element being the heat generation units,
when viewed from the axial direction, the first power circuit and the first motor connection hole are disposed on a first side with respect to a reference straight line that passes through a central axis line of the rotation shaft and that extends in an orthogonal direction orthogonal to the axial direction, and the second power circuit and the second motor connection hole are disposed on a second side with respect to the reference straight line, and
when viewed from the axial direction, at least a part of the first power circuit is disposed between the first motor connection hole and the rotation sensor, and at least a part of the second power circuit is disposed between the second motor connection hole and the rotation sensor.

5. The rotating electrical machine according to Claim 4,
wherein the control unit has a connector having a power connection terminal to which power is input from an outside and a signal connection terminal to which a signal is input from the outside,
a power connection hole connected to the power connection terminal and a signal connection hole connected to the signal connection terminal are formed in the substrate, and a control circuit that controls the first power circuit and the second power circuit is mounted on the substrate, and
when viewed from the axial direction, the control circuit is disposed between the signal connection hole, and the first power circuit and the second power circuit.

6. The rotating electrical machine according to any one of Claims 2 to 5,
wherein the substrate has a first surface facing the housing and a second surface on an opposite side to the first surface,
the capacitor and the shunt resistor are disposed on the first surface, and the switching element is disposed on the second surface, and
a capacitor storage hole that is disposed at a position of overlapping the case attachment portion in the axial direction and that stores at least a part of the capacitor is formed in the housing.

7. The rotating electrical machine according to any one of Claims 2 to 6,
wherein a recess portion that is provided at a position of overlapping the shunt resistor in the axial direction and that is recessed from a facing surface of the housing is provided in the housing, the facing surface facing the substrate and
a surface of the recess portion, which faces the substrate, is included in the heat transfer surface.

8. The rotating electrical machine according to any one of Claims 2 to 7,
wherein a protrusion portion that is provided at a position of overlapping the switching element in the axial direction and that protrudes from a facing surface of the housing, which faces the substrate, is provided on the housing, and
a surface of the protrusion portion. which faces the substrate, is included in the heat transfer surface.

9. The rotating electrical machine according to any one of Claims 1 to 8,
wherein the control unit has a connector having a power connection terminal to which power is input from an outside and a signal connection terminal to which a signal is input from the outside,
a power connection hole connected to the power connection terminal and a signal connection hole connected to the signal connection terminal are formed in the substrate, and
the power connection terminal and the signal connection terminal are press-fit terminals.

10. The rotating electrical machine according to Claim 6, wherein the capacitor storage hole has a bottom portion facing the substrate.

11. The rotating electrical machine according to Claim 6, wherein the capacitor storage hole penetrates the housing in the axial direction.

12. The rotating electrical machine according to Claim 6, wherein a second heat dissipating member thermally connecting the capacitor storage hole and the capacitor is provided between the capacitor storage hole and the capacitor.
